# EUROPÄISCHE PATENTSCHRIFT

(11) **EP 2 377 672 B1**
(45) Veröffentlichungstag und Bekanntmachung des Hinweises auf die Patenterteilung: **24.02.2021**
(21) Anmeldenummer: 11157014.9
(22) Anmeldetag: 04.03.2011
(51) Int. Cl.: B29C 64/153, B29C 64/25, B33Y 10/00, B33Y 30/00, B22F 3/105

(54) **Verfahren zur Verkleinerung des unteren Bauraums einer Lasersinteranlage**
Process for reducing the size of the lower construction chamber of a laser sintering installation
Procédé de réduction de l'espace de construction inférieur d'une installation de frittage laser

(30) Priorität: 17.04.2010 DE 202010005162 U
(43) Veröffentlichungstag der Anmeldung: 19.10.2011
(73) Patentinhaber: Evonik Operations GmbH, 45128 Essen (DE)
(72) Erfinder: Diekmann, Wolfgang, 45731 Waltrop (DE); Grebe, Maik, 44805 Bochum (DE); Altkemper, Stefan, 46282 Dorsten (DE)
(74) Vertreter: Evonik Patent Association

(56) Entgegenhaltungen:
- WO-A1-95/15842
- DE-A1-102009 020 987
- US-A1- 2007 026 099
- US-A1- 2010 090 374

## Beschreibung

Lasersinteranlagen sind in verschiedenen Ausführungen, die sich unter anderem im Bauraumvolumen unterscheiden, am Markt verfügbar. Nachteilig bei den verfügbaren Anlagen ist jedoch, dass das Bauraumvolumen nicht variabel auf die jeweiligen Bedürfnisse anzupassen ist. Dies hat zur Folge, dass die benötigte Pulvermenge bei Lasersinteranlagen - auch beim Bau sehr kleiner Teile mit kleiner Stückzahl - nicht reduziert werden kann. Wenn sich das Verhältnis von Bauteil- zu Bauraumvolumen verschlechtert, erhöhen sich die Kosten pro Bauteil Situation aufgrund des zusätzlich benötigten Pulvers.

US 2007/026099 A1 beschreibt ein Verfahren gemäß dem Oberbegriff der Ansprüche 1 und 2.

Es bestand also die Aufgabe die Nachteile des Standes der Technik zu überwinden. Um die Pulvermenge auf die Bauteilgröße anpassen zu können wurde nun ein Verfahren, wie in den Ansprüchen beschrieben, gefunden, das eine Bauraumverkleinerung ermöglicht.

Die nachfolgenden Skizzen 1 bis 3 zeigen das Prinzip verschiedener Ausführungen einer Bauraumverkleinerung.

Die Skizzen 1, 2 und 2a zeigen eine Möglichkeit der Bauraumverkleinerung durch zusätzliche Seitenwände und einen Aufsatz auf der vorhandenen Bauplattform. Skizze 1 ist dabei eine vereinfachte Gesamtdarstellung, während die Skizzen 2 und 2a vereinfacht eine Schnittdarstellung des Bauraums darstellen. Durch Absenken der Bauplattform senkt sich der starre Aufsatz im gleichen Maße, wodurch die verkleinerte Pulverfläche ebenfalls um die Schichtstärke abgesenkt wird. Die für den Bauvorgang verfügbare Fläche wird durch die Abmaße der zusätzlichen Bauraumwände und des Bodenplattenaufsatz bestimmt. Die zusätzlichen Bauraumwände können fest miteinander verbunden sein oder auch durch eine Schiebe- und Feststellmechanik miteinander verbunden sein. Letzteres hätte den Vorteil, dass die Größe des Bauraums variabel gestaltet werden kann. Es müsste dann nur noch die Größe des Bodenplattenaufsatzes an die durch die zusätzlichen Bauraumwände vorgegebenen Größe angepasst werden.

Skizze 3 zeigt einen Schnitt aus der Mitte des Bauraums mit neuer Bauplattform. Durch die neue Bauplattform steht die gesamte Höhe des Bauraums zur Verfügung. Die Seitenwände sind entsprechend über die gesamte Höhe des Bauraums anzubringen.

Allen hier dargestellten Möglichkeiten ist gemein, dass die neue Bauraumfläche für die jeweilige Verkleinerung festgelegt ist.

Gemäß der Erfindung ist eine Temperatursteuerung entlang der z-Achse vorgesehen. Die Temperaturfühler genauso wie die Heiz- und Kühlelemente sind an der neuen Bauraumwand installiert. Hierzu kann der Abstand zwischen dem ursprünglichem Baubehälter und dem Verkleinerungseinsatz, genutzt werden. Die gezielte Temperaturführung, z.B. ein gleichmäßigeres Abkühlen, aber auch ein gezieltes Temperieren der Bauteile ist damit möglich. Durch gleichmäßigeres Abkühlen ist z.B. eine geringere Verzugsneigung erzielbar. Des Weiteren ist die untere Bauraumtemperatur an die verwendeten Materialien anpassbar. Vor allem bei Materialien mit höherem Schmelzpunkt ist dies eine notwendige Anpassung des Prozesses. Durch Anbringen mehrerer, getrennt regelbarer Heizelemente können verschiedene Temperaturzonen eingestellt werden.

Sind neben den Thermoelementen auch noch Kühlschleifen vorhanden, so kann die Temperatur schneller reduziert und somit die Zeit bis zur Bauteilentnahme reduziert werden. Eine schnellere Abkühlphase und die damit verbundene geringere thermische Belastung kann zudem, je nach verwendetem Material, positiv für die erneute Nutzung des Pulvers sein.

Die Ausführung der Bauraumverkleinerung ist auf den jeweils erforderlichen Bauraumbedarf anzupassen und ist nicht auf eine Größe limitiert. Die Nutzung der vorhandenen Bauplattform reduziert in der skizzierten Ausführung die zur Verfügung stehende Höhe auf etwas unter die Hälfte der ursprünglich vorhandenen Höhe. Durch Austausch der Bodenplatte kann auch die gesamte Bauraumhöhe genutzt werden. In jedem Fall kann die vorhandene Anlagensteuerung genutzt werden.

Für die Prozesssicherheit ist eine gute thermische Entkopplung vom oberen Bauraum zum unteren Bauraum von Vorteil. Die Baufeldplatte sollte daher aus einem Material bestehen, welches neben der guten Temperaturfestigkeit auch eine gute Wärmeisolationseigenschaft besitzt. Es bieten sich daher Materialien wie temperaturbeständige Polymere, Faserverbundwerkstoffe oder feuerfeste Steine an. Durch eine konstruktive Gestaltung, wie Sandwichbauweise, kann die Wärmeisolation weiter verbessert werden oder auch Materialien mit schlechter Isolationseigenschaft, wie zum Beispiel Metalle, eingesetzt werden.

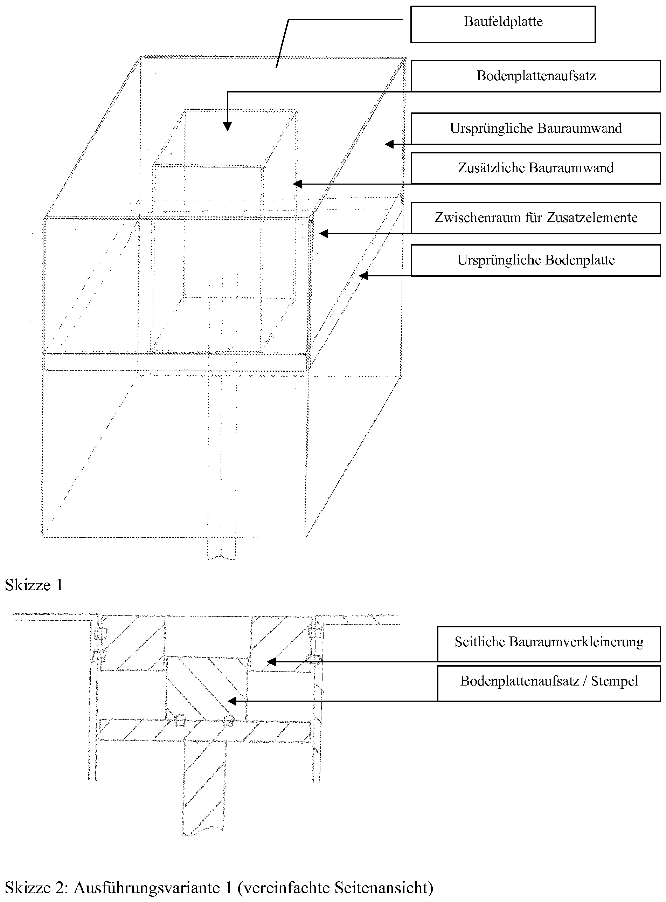

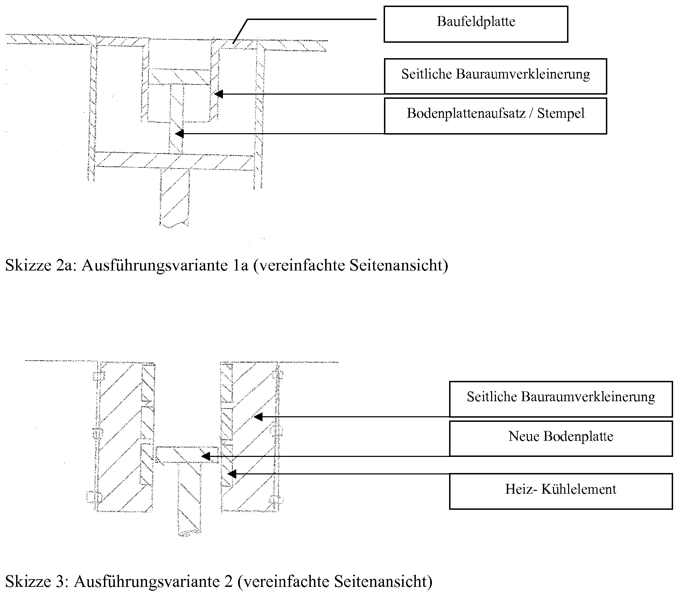

## Patentansprüche

1. Verfahren zur Verkleinerung des unteren Bauraums einer Lasersinteranlage, wobei in eine bestehende Lasersinteranlage zusätzliche oder neue Seitenwände in den unteren Bauraum eingebracht sind **dadurch gekennzeichnet, dass** auf der vorhandenen Bauplattform der Anlage ein auf die zusätzlichen bzw. neuen Seitenwände angepasster Aufsatz aufgebracht wird, wobei zur Temperatursteuerung entlang der z-Achse Temperaturfühler, Heiz- und Kühlelemente an den Seitenwänden installiert sind.

2. Verfahren zur Verkleinerung des unteren Bauraums einer Lasersinteranlage, wobei in eine bestehende Lasersinteranlage zusätzliche oder neue Seitenwände in den unteren Bauraum eingebracht sind und die vorhandene Bauplattform der Anlage durch eine neue Bauplattform, die an die zusätzlichen bzw. neuen Seitenwände angepasst ist, ersetzt wird, **dadurch gekennzeichnet, dass** zur Temperatursteuerung entlang der z-Achse Temperaturfühler, Heiz- und Kühlelemente an den Seitenwänden installiert sind.

3. Verfahren nach Anspruch 1 oder 2,
**dadurch gekennzeichnet,**
**dass** durch eine Schiebe- und Feststellmechanik der Bauraum variabel eingestellt werden kann.

4. Verfahren nach Anspruch 1 oder 2, **dadurch gekennzeichnet,**
**dass** der obere und untere Bauraum durch eine Baufeldplatte getrennt wird, die eine gute Wärmeisolationseigenschaft besitzt.

## Claims

1. Method for reducing the size of the lower construction chamber of a laser sintering installation, wherein additional or new side walls are introduced into the lower construction chamber in an existing laser sintering installation, **characterized in that** an attachment adapted to the additional and/or new side walls is applied to the existing construction platform of the installation, wherein temperature sensors, heating elements and cooling elements are installed on the side walls for the purpose of controlling the temperature along the z axis.

2. Method for reducing the size of the lower construction chamber of a laser sintering installation, wherein additional or new side walls are introduced into the lower construction space in an existing laser sintering installation and the existing construction platform of the installation is replaced by a new construction platform adapted to the additional and/or new side walls, **characterized in that** temperature sensors, heating elements and cooling elements are installed on the side walls for the purpose of controlling the temperature along the z axis.

3. Method according to Claim 1 or 2, **characterized in that** the construction chamber can be variably set by a sliding and fixing mechanism.

4. Method according to Claim 1 or 2, **characterized in that** the upper construction chamber and the lower construction chamber are separated by a construction area plate having a good thermal insulation property.

## Revendications

1. Procédé de réduction de l'espace de construction inférieur d'une installation de frittage laser, dans lequel, dans une installation de frittage laser existante, des parois latérales supplémentaires ou nouvelles sont introduites dans l'espace de construction inférieur, **caractérisé en ce qu'**un bloc adapté aux parois latérales supplémentaires ou nouvelles est monté sur la plate-forme de construction existante de l'installation, des palpeurs de température, des éléments de chauffage et des éléments de refroidissement étant installés au niveau des parois latérales en vue de la commande de la température le long de l'axe z.

2. Procédé de réduction de l'espace de construction inférieur d'une installation de frittage laser, dans lequel, dans une installation de frittage laser existante, des parois latérales supplémentaires ou nouvelles sont introduites dans l'espace de construction inférieur et la plate-forme de construction existante de l'installation est remplacée par une nouvelle plate-forme de construction qui est adaptée aux parois latérales supplémentaires ou nouvelles, **caractérisé en ce que** des palpeurs de température, des éléments de chauffage et des éléments de refroidissement sont installés au niveau des parois latérales en vue de la commande de la température le long de l'axe z.

3. Procédé selon la revendication 1 ou 2,
**caractérisé en ce que**
l'espace de construction peut être ajusté de manière variable par un mécanisme de coulissement et de fixation.

4. Procédé selon la revendication 1 ou 2, **caractérisé en ce que** l'espace de construction supérieur et l'espace de construction inférieur sont séparés par une plaque de champ de construction qui possède une bonne propriété d'isolation thermique.
